# EUROPEAN PATENT SPECIFICATION

(11) **EP 2 874 523 B1**
(45) Date of publication and mention of the grant of the patent: **02.12.2015**
(21) Application number: 13767103.8
(22) Date of filing: 17.07.2013
(51) Int. Cl.: A47J 27/04

(54) **DEVICE FOR STEAMING FOOD**
VORRICHTUNG ZUM GAREN VON LEBENSMITTELN
DISPOSITIF DE CUISSON À LA VAPEUR D'ALIMENT

(30) Priority: 19.07.2012 EP 12177088
(43) Date of publication of application: 27.05.2015
(73) Proprietor: Koninklijke Philips N.V., 5656 AE Eindhoven (NL)
(72) Inventor: PAAUW, Hendrik Klaas, 5656 AE Eindhoven (NL); TEN DONKELAAR, Henk Jan, 5656 AE Eindhoven (NL); VAN ZUTPHEN, Martijn, 5656 AE Eindhoven (NL); ZWANENBURG, Godwin Dirk, 5656 AE Eindhoven (NL)
(74) Representative: Coops, Peter
(86) International application number: PCT/IB2013/055890
(87) International publication number: WO 2014/013461

(56) References cited:
- WO-A1-2011/080673
- US-A- 5 586 487
- US-A- 6 058 926
- US-A1- 2006 249 137
- US-A1- 2008 163 757

## Description

### FIELD OF THE INVENTION

The present invention relates to a device for steaming food, comprising a base part and at least one basket which is intended to be positioned above the base part in a normal orientation of the device, wherein the at least one basket has a bottom provided with holes for letting through steam and a standing wall projecting from the bottom and delimiting a space above the bottom for receiving and containing food to be steamed, wherein the base part comprises a steam chamber for containing water to be converted into steam and heating means associated with the steam chamber for heating water which is inside the steam chamber, wherein the device further comprises a circuit for controlling a power supply to the heating means, and wherein the circuit comprises a temperature sensor.

### BACKGROUND OF THE INVENTION

A device for steaming food as defined in the foregoing is known, for example from EP 2 338 390. The known steaming device comprises a variable-power heating medium-generating unit configured to generator vapor from a fluid. Tot that end, the unit comprises a variable-power heating element and a reservoir which serves as a steam chamber for holding fluid to be evaporated by heat generated by the variable-power heating element. Also, the known steaming device comprises a temperature sensor which is arranged in a fluid connection between the variable-power heating medium-generating unit and a basket which is at the bottom of a stack of baskets as used with the device. A control unit is adapted to, on the basis of a difference between a temperature sensed by the temperature sensor and a predetermined temperature, adjust the power of the variable-power heating medium-generating unit.

Furthermore, the known steaming device comprises a fluid return connection going from a top-most basket in the stacking arrangement of baskets to the variable-power heating medium-generating unit. The fluid return connection can be comprised by a number of connectable fluid return connection portions, wherein each of the baskets can be arranged such that at least a portion of the basket can form a respective fluid return connection portion.

In EP 2 338 390, a specific teaching regarding a position of the temperature sensor in the steaming device cannot be found. Besides a position in a fluid connection between the variable-power heating medium-generating unit and a basket, other positions are mentioned as examples, including a position in the variable-power heating medium-generating unit, a position in a basket, a position in a fluid return path, a position under a cover of the device, etc.

### SUMMARY OF THE INVENTION

In view of the above, it is an object of the present invention to provide a steaming device in which accurate temperature control can be achieved on the basis of a well-defined position of the temperature sensor. The object is achieved by means of a steaming device comprising a base part and at least one basket, wherein the base part comprises a steam chamber for containing water to be converted into steam and heating means associated with the steam chamber for heating water which is inside the steam chamber as mentioned earlier, wherein the base part further comprises a reservoir for containing water to be supplied to the steam chamber, which is in fluid communication with the steam chamber, and also a drip tray for receiving fluid from the at least one basket during operation of the device and for closing an open top side of the reservoir, wherein the device further comprises a circuit for controlling a power supply to the heating means, and wherein the circuit comprises a temperature sensor which is arranged at a position in the drip tray, at a distance with respect to a first imaginary ring-shaped plane defined by an outer wall of a steam outlet of the steam chamber and an extension thereof in a range of 0.5 to 0.9 of a total distance between the first imaginary ring-shaped plane and a second imaginary ring-shaped plane defined by the standing wall of the at least one basket and an extension thereof, measured along an imaginary line intersecting both a geometric center axis of the steam outlet and the position of the temperature sensor, in a plane perpendicular to the geometric center axis of the steam outlet. In other words, when a cylindrical coordinate system in which the longitudinal axis is constituted by the geometric center axis of the steam outlet is assumed, a radial distance of the temperature sensor with respect to the imaginary ring-shaped plane associated with the steam outlet is in a range of 0.5 to 0.9 of a total distance between the imaginary ring-shaped plane as mentioned and the imaginary ring-shaped plane associated with the at least one basket, measured in a reference plane where the temperature sensor is present, along a radius intersecting the position of the temperature sensor.

When the present invention is applied, it is possible to realize a steaming process during which temperatures are controlled in an accurate way. It may be advantageous to have such a steaming process, for example, in a case in which it is required to have at least one well-defined phase in a steaming process during which steaming takes places at a temperature lower than 100 °C. It has been found that such low temperature steaming results in optimal taste and texture in many types of food, such as fish, potatoes and rice, on the basis of the fact that enzymes are made to come to their best expression.

Thus, in order to realize accurate control of the steaming temperature, it is advantageous to have a suitable controlling circuit which is equipped with a temperature sensor, as known from EP 2 338 390. According to an insight underlying the present invention, it is important to make a smart choice when it comes to positioning of the temperature sensor. When the temperature sensor is placed too close to the outside of the steaming device, a measurement performed by the sensor will be influenced too much by the temperature of the surroundings of the device, i.e. the room temperature, and when the temperature sensor is placed too close to the steam outlet of the steam chamber, a measurement performed by the sensor will be influenced too much by the temperature of the steam. It is an achievement of the present invention that a specific range is now defined in respect of the positioning of the temperature sensor, on the basis of which the most accurate results can be obtained.

In theory, an ideal position of the temperature sensor would be a position in the at least one basket, so that the sensor would be capable of giving the most accurate data representing the actual temperature close to the food in the basket. However, such a position would not be very practical, as a complex construction would be needed. Another disadvantage would be that the sensor would occupy space which could otherwise be used for accommodating food. According to the present invention, it is advantageous for the base part of the steaming device to comprise a drip tray, as a result of which it is not necessary to use a rather complex fluid return connection such as known from EP 2 338 390, and it is possible for the temperature sensor to be at a position in the drip tray. In this way, the temperature sensor can be positioned close to the bottom of the at least one basket, thereby yielding relevant data which are representative of the temperature prevailing in the area of the food in the basket, without interfering with the construction and/or other functionalities of the steaming device.

Advantageously, the controlling circuit is programmed to realize at least three temperature phases during operation of the steaming device, wherein a temperature associated with an intermediate temperature phase is lower than temperatures associated with a start temperature phase and a final temperature phase. In that case, the intermediate temperature phase can be a phase of low temperature steaming as mentioned earlier. However, when using low temperature steaming, it takes much more time before the food is done than with regular steaming at 100°C. This problem is overcome by realizing the three temperature phases as mentioned, wherein, during the first phase, a fast heating-up process is carried out during a time which is long enough for the steaming device to heat up, but which is not so long that the food overheats, wherein, during the second phase, a low temperature steaming process is carried out during a period which is long enough for the taste and the texture of the food to be optimal, but which is not so long that the whole steaming process takes an unnecessarily long time, and wherein, during a third phase, a regular steaming process is carried out in order to achieve doneness of the food in an accelerated way when compared to the low temperature steaming process. For sake of completeness, in respect of the low temperature steaming process, it is noted that such a process may be achieved by reducing the steaming power and/or adding air to the steam, as described in EP 2 338 390, for example.

The third temperature phase may be followed by a fourth temperature phase, wherein the food which is ready is kept warm. In particular, the phases as described in the following can be realized in the steaming device according to the present invention: a first phase, in which a temperature is set in a range between 80°C and 100°C, during a time in a range between 2 and 10 minutes, a second phase, in which a temperature is set in a range between 50°C and 90°C, during a time in a range between 0 and 120 minutes, a third phase, in which a temperature is set in a range between 90°C and 100°C, during a time in a range between 0 and 120 minutes, and a fourth phase, in which a temperature is set in a range between 60°C and 100°C, during a time in a range between 0 and 60 minutes. For example, in a process for steaming fish, it is advantageous if the setpoint in the second phase is between 60°C and 80°C, and if the duration of the third phase is 0 minutes, so that the third phase is skipped, as in such a way, the taste and texture of the fish can be improved with respect to the result of conventional steaming processes. In a process for steaming potatoes, it is advantageous if the setpoint in the second phase is between 60°C and 80°C, and if the duration of the second phase is 15-60 minutes, as in such a way, the taste and texture of the potatoes can be improved with respect to the result of conventional steaming processes. In a process for steaming rice, it is advantageous if the setpoint in the second phase is between 45°C and 60°C, and if the duration of the second phase is 15-60 minutes, as in such a way, the taste and texture of the rice can be improved with respect to the result of conventional steaming processes.

The above-described and other aspects of the present invention will be apparent from and elucidated with reference to the following detailed description of a steaming device and various components of the steaming device.

### BRIEF DESCRIPTION OF THE DRAWINGS

The present invention will now be explained in greater detail with reference to the figures, in which equal or similar parts are indicated by the same reference signs, and in which:
Figure 1 shows an exploded view of a steaming device according to the present invention, wherein only one basket of the steaming device is shown;
Figure 2 shows a side view of the steaming device, wherein three baskets are shown;
Figure 3 shows a view of a longitudinal section of the steaming device, wherein only one basket is shown, and wherein furthermore an aroma infuser which can be part of the device is shown; and
Figure 4 diagrammatically shows an area associated with a range of an optimal position of a temperature sensor of the steaming device.

### DETAILED DESCRIPTION OF EMBODIMENTS

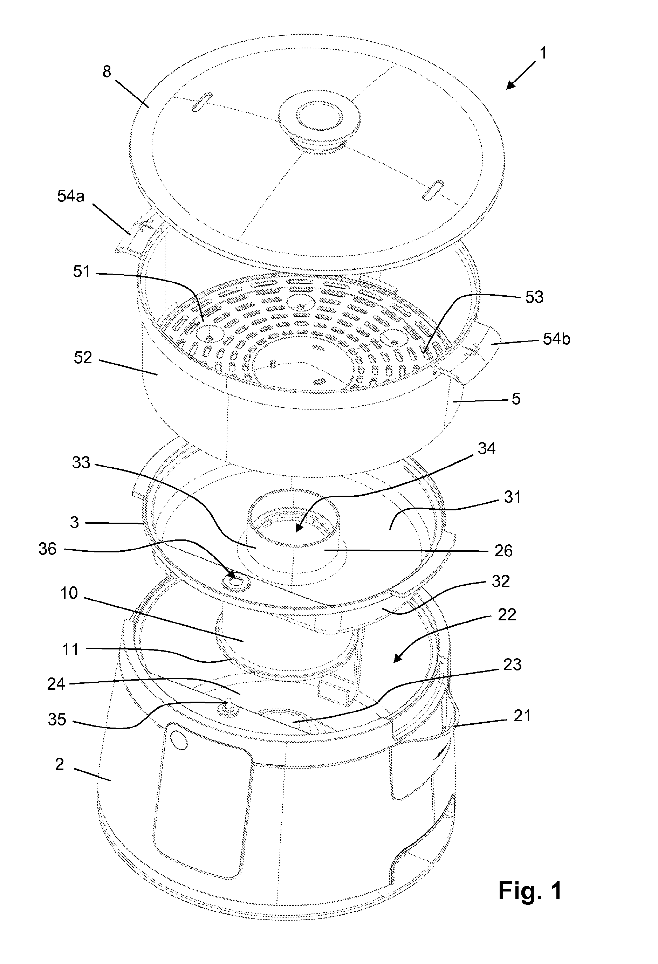

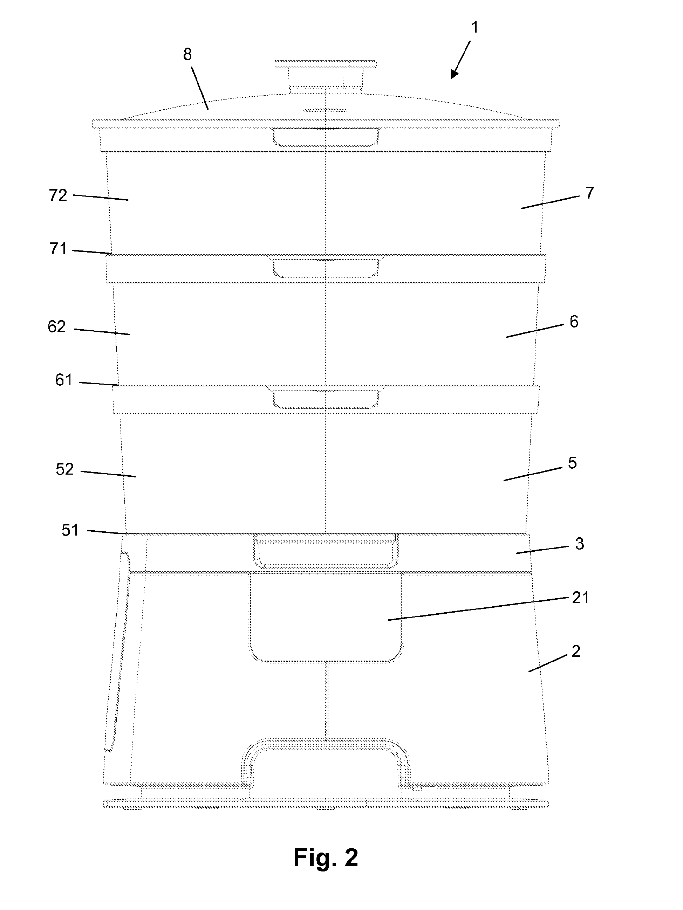

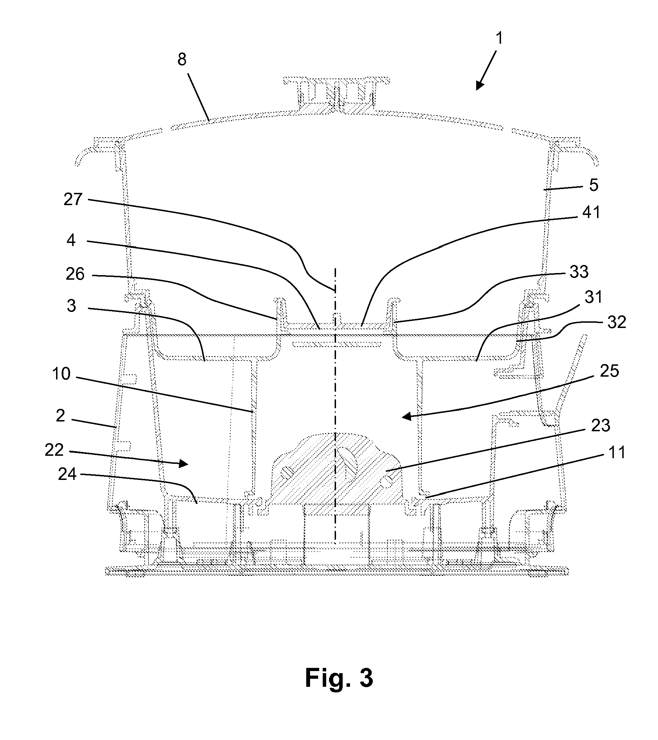

Figure 1 shows an exploded view of a steaming device 1 according to the present invention, figure 2 shows a side view of the steaming device 1, and figure 3 shows a view of a longitudinal section of the steaming device 1. In figures 1 and 3, only one basket 5 of the steaming device 1 is shown, while in figure 2, three baskets 5, 6, 7 are shown. The orientation of the steaming device 1 as shown in figure 2 is a normal orientation of the device 1. It is noted that in the following, when terms like "bottom" and "top" are used, this normal orientation of the device 1 is assumed. In particular, the normal orientation of the device 1 is an orientation in which a base part 2 of the device 1 is at a bottom side of the device 1, a drip tray 3 is placed on top of the base part 2, one or more baskets 5, 6, 7 are placed on top of the drip tray 3, and a cover 8 is placed on top of the basket(s) 5, 6, 7.

The steaming device 1 is intended to be used for cooking food by steaming the food. Types of food which can be prepared in this way include rice, fish, and vegetables like potatoes, broccoli, cauliflower, carrots, etc. Various types of food can be steamed at one time by using more than one basket 5, 6, 7 and/or having a partition baffle (not shown) in a basket 5, 6, 7 if so desired. A user of the steaming device 1 is free to decide how many baskets 5, 6, 7 should be used in a cooking process. Each of the baskets 5, 6, 7 comprises a bottom 51,61, 71 for supporting the food and a standing wall 52, 62, 72 for delimiting a space above the bottom 51, 61, 71 for receiving and containing the food. The baskets 5, 6, 7 can be made in two parts, such that the bottom 51, 61, 71 can be detached from the standing wall 52, 62, 72, which involves good cleanability of the baskets 5, 6, 7, but this is not essential within the framework of the present invention.

In the following, for sake of clarity, it will be assumed that only one basket 5 is used in the steaming device 1, as shown in figures 1 and 3. Furthermore, characteristics of the baskets 5, 6, 7 will be described with reference to only one basket 5, wherein it is assumed that the baskets 5, 6, 7 are identical. It is emphasized that the number of baskets 5, 6, 7 which are provided with the steaming device 1 can be chosen freely within the framework of the present invention. Also, it is noted that if more than one basket 5, 6, 7 are available, the baskets 5, 6, 7 do not necessarily need to be identical, although it is convenient to a user of the steaming device 1 if they are.

The bottom 51 of the basket 5 is provided with holes 53 for letting through steam in an upward direction. The periphery of the basket 5 can have any suitable shape, and the same is true in respect of the peripheries of the base part 2, the drip tray 3, and the cover 8. The peripheries of the components 2, 3, 5, 8 as mentioned are generally the same, so that when the components 2, 3, 5, 8 are stacked on top of each other, an entirety is obtained which is free from irregularities in its outer surface, except for some practical projections like grips 54a, 54b of the basket 5 and a filling port 21 of the base part 2. In the shown example, the peripheries of the base part 2, the drip tray 3, the basket 5 and the cover 8 are circular. Other suitable shapes of the peripheries include an oval shape, a square shape, and a rectangular shape. In the latter two cases, it is possible for corners of the components 2, 3, 5, 8 to have rounded corners.

The base part 2 comprises a space which serves as a reservoir 22 for receiving and containing water to be used in the production of steam during operation of the steaming device 1. At a central position inside the reservoir 22, a bulb-shaped heater 23 for supplying heat to the water is present. Electronic elements which are needed for operating and controlling the heater 23 are positioned underneath a bottom 24 of the reservoir 22. For the purpose of allowing a user of the steaming device 1 to fill the reservoir 22 with water in a convenient manner, the base part 2 comprises the filling port 21 as mentioned earlier.

Important functions of the drip tray 3 are receiving fluid from the basket 5 during operation of the steaming device 1 and closing an open top side of the reservoir 22. In general, the drip tray 3 is shaped like a tray having a closed bottom 31 and a standing wall 32 projecting from the bottom 31 and delimiting a space above the bottom 31 for receiving and containing the fluid dripping from the basket 5. The fluid may be water which is obtained as steam condenses, and also fluid from the food which is present in the basket 5. At a top side of the bottom 31, at a central position, the drip tray 3 is provided with a tube 33 projecting from the bottom 31 in an upward direction, which will hereinafter be referred to as steam outlet 33. At the position of the tube 33, a hole 34 is present in the otherwise closed bottom 31 for letting through steam in an upward direction.

Furthermore, at a bottom side of the bottom 31, at a central position, the drip tray 3 is provided with another tube 10, namely a tube 10 projecting from the bottom 31 in a downward direction, which will hereinafter be referred to as separation tube 10. A height of the separation tube 10 is chosen such that when the drip tray 3 is in place on the base part 2, a free end 11 of the separation tube 10 contacts the bottom 24 of the reservoir 22, wherein, in the shown example, the separation tube 10 has a function in supporting the drip tray 3 on the bottom 24 of the reservoir 22. Preferably, the separation tube 10 is an integral part of the drip tray 3, but that does not alter the fact that it is also possible for the separation tube 10 to be designed such as to be attachable to and detachable from the drip tray 3, or even to be a separate part.

The separation tube 10 defines a steam chamber 25 inside the reservoir 22 by separating a central part of the reservoir 22 from the rest of the reservoir 22. In particular, the separation tube 10 is designed such as to surround the heater 23, so that a relatively small space for containing water is formed around the heater 23 which serves as the steam chamber 25 during operation of the steaming device 1. It will be understood that continuously heating small quantities of water involves a more effective use of the heater 23 as compared to heating the entire content of the reservoir 22, wherein the steaming device 1 is capable of delivering steam much faster during a start-up phase. For the purpose of allowing water to flow from the reservoir 22 to the steam chamber 25, the free end 11 of the separation tube 10 is provided with notches (not shown).

The steaming device 1 may comprise an aroma infuser 4 for containing items for adding flavor and aroma to the food to be steamed, as shown in figure 3. A user can place herbs and spices in the aroma infuser 4, which is generally shaped like a tray having a bottom 41 which is at least partially permeable to steam. The aroma infuser 4 is positioned on top of the drip tray 3, particularly on top of the steam outlet 33. In this way, it is achieved that all steam which is produced during operation of the steaming device 1 passes through the aroma infuser 4 and the contents of the aroma infuser 4 before it reaches the food to be steamed, so that the taste and the aroma of the food is directly influenced by the interaction of the steam with the contents of the aroma infuser.

The standing wall 52 of the basket 5 can be made of a transparent material, such as a transparent plastic, for allowing a user of the steaming device 1 to watch and check the contents of the basket 5 during a steaming process. In general, the drip tray 3, the aroma infuser 4, the basket 5 and the cover 8 can be made of a plastic. Also, a number of elements of the base part 2 can be made of a plastic. Particularly, the reservoir 22 can be delimited by plastic walls.

The way in which the steaming device 1 works will be explained in the following. Before switching on the steaming device 1, a user of the device 1 makes some preparations. In the first place, the user takes care that the reservoir 22 is filled with a fresh quantity of water or possibly another fluid which is suitable to be used for steaming food, wherein the user can pour the fluid into the reservoir 22 through the filling port 21. When the reservoir 22 is filled to a sufficient extent, the user puts the drip tray 3 in place. In the process, the steam chamber 25 is formed inside the reservoir 22 as the free end 11 of the separation tube 10 touches the bottom 24 of the reservoir 22 and separates a small quantity of the water from the rest of the water contained inside the reservoir 22. Furthermore, the user fills the aroma infuser 4 with herbs and/or spices and places the aroma infuser 4 on top of the steam outlet 33. Also, the user fills the basket 5 with food to be steamed and places the basket 5 on top of the drip tray 3. Finally, the user covers the basket 5 by means of the cover 8. For sake of completeness, it is noted that the use of the aroma infuser 4 is not necessary for proper operation of the steaming device 1, so that a user of the device 1 may decide to omit the aroma infuser 4 if there is no need for adding extra flavor to the food to be steamed.

When the preparations are done, the user switches on the steaming device 1 and provides input to a controlling unit of the steaming device 1 by means of a control panel (not shown) arranged on the base part 2. For example, the user sets a duration of the steaming process. According to another possibility, the user enters information regarding the type of food which is present inside the basket 5. When the controlling unit is programmed such as to automatically choose optimal parameters of a steaming process with the type of food, particularly successive phases which are a combination of a certain temperature and a certain period of time, there is no need for the user to think of setting parameters himself/herself, so that mistakes are avoided.

As soon as the steaming device 1 is switched on, electric power is supplied to the heater 23 and the temperature of the water surrounding the heater 23 in the steam chamber 25 rises until the water starts to boil and steam is produced. The steam exits the steam chamber 25 through the steam outlet 33, flows through the aroma infuser 4 and flows further to the basket 5 while carrying the flavor and the aroma of the contents of the aroma infuser 4. Inside the basket 5, the food is heated under the influence of interaction with the steam and is cooked as a result thereof. In the process, the flavor and the aroma carried by the steam are absorbed by the food. The steam automatically flows in an upward direction and eventually reaches the cover 8, passing through the holes 53 in the bottom 51 of the basket 5. The steam chamber 25 is continuously refilled with water flowing from the reservoir 22 under the influence of gravity, on the basis of the principle of communicating vessels, through the notches which are present at the end 11 of the separation tube 10 touching the bottom 24 of the reservoir 22.

The steaming device 1 comprises a circuit for controlling a power supply to the heater 23, wherein the circuit is capable of using input about actual conditions obtained from a temperature sensor 35. It is understood that such a way of controlling the power supply yields more accurate results of the temperature at which steaming processes are performed than when control would be performed without any feedback. According to the present invention, in order to guarantee relevant results of the measurements performed by the temperature sensor 35, it is important to choose a position of the temperature sensor 35 such as to be in a certain area. In particular, it is preferred for the temperature sensor 35 to be arranged in the at least one basket 5 or right underneath the basket 5, at a position between the steam outlet 33 and an extension thereof and the standing wall 52 of the basket 5 and an extension thereof.

In the shown example, the temperature sensor 35 is arranged on the base part 2 of the steaming device 1, at a top side of the base part 2, at a position close to the periphery of the base part 2. The drip tray 3 is provided with a hole 36 for letting through the temperature sensor 35 when the drip tray 3 is put in place on the base part 2. In this way, it is achieved that during a steaming process, the temperature sensor 35 is present in the drip tray 3, wherein the position of the temperature sensor 35 is a position which is close to the bottom 51 of the basket 5.

Furthermore, as mentioned in the foregoing, the position of the temperature sensor 35 is preferably chosen such as to be a position between the steam outlet 33 and an extension thereof and the standing wall 52 of the basket 5 and an extension thereof. In particular, an optimal distance between the position of the temperature sensor 35 and an outer wall 26 of the steam outlet 33 in a radial direction, i.e. a direction in a plane perpendicular to a geometric center axis 27 of the steam outlet 33, intersecting with both the geometric center axis 27 and the position of the temperature sensor 35, is found in a range of 0.5 to 0.9 of a distance between the standing wall 52 of the basket 5 and the outer wall 26 of the steam outlet 33, determined in the same direction.

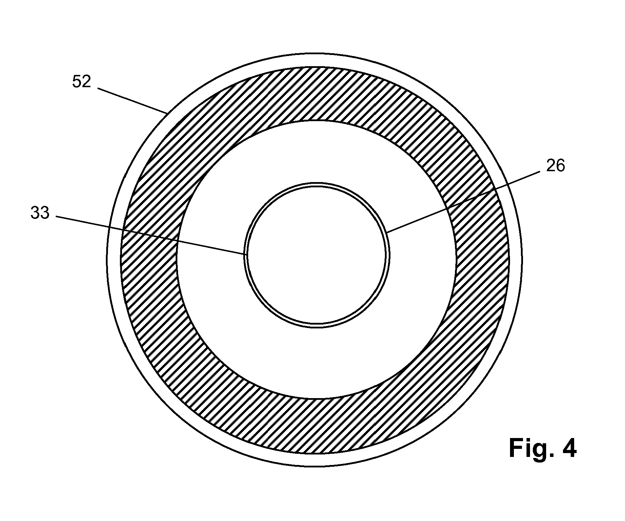

Figure 4 serves to illustrate the area associated with the range of the optimal position of a temperature sensor in the radial direction. To that end, the figure diagrammatically shows the outlines of the steam outlet 33 and the standing wall 52 of the basket 5, wherein the area is indicated as a hatched ring between the outlines as mentioned.

With the temperature sensor 35 being present inside the steaming device 1, it is possible to accurately set a temperature or various temperature phases during a steaming process. Needless to say that it is advantageous for the steaming device 1 to be equipped with some kind of timer as well when it is desired that temperature phases are realized, wherein the timer may be programmable by a user. In this respect, it is noted that for many types of food, it is advantageous to realize fast heating of the food during a start-up phase, to subject the food to a temperature lower than 100°C during a second phase, and to have a higher temperature again during one or more subsequent phases.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that in this text, the terms "water" and "fluid" are used in respect of liquids which can be present in the steaming device 1. The use of these terms should not be understood such as to mean that the present invention is restricted to the use of a certain type of liquid. Particularly, the term "water" should be interpreted in a broad sense, not only in the meaning of pure water, but also in the meaning of water-based liquids.

In the example of a steaming device 1 according to the present invention shown in figure 2, the device 1 comprises three baskets 5, 6, 7 which are intended to be stacked on top of each other. That does not alter the fact that the number of baskets 5, 6, 7 can be chosen freely within the framework of the present invention, as mentioned earlier. Furthermore, when two or more baskets 5, 6, 7 are used, it is not necessary that the baskets 5, 6, 7 are intended to be positioned at different levels. In other words, in such a case, it is also possible for the baskets 5, 6, 7 to be intended to be positioned in a side-by-side configuration at one and the same level on the base part 2.

The baskets 5, 6, 7 can have any suitable shape as long as something like a bottom 51, 61, 71 for supporting food to be steamed and something like an upstanding wall 52, 62, 72 for retaining the food to be steamed on the bottom 51, 61, 71 are present. In a practical embodiment, the bottom 51, 61, 71 can be chosen such as to have a more or less flat appearance. The standing wall 52, 62, 72 can be shaped according to a circle or an ellipse, for example, or according to a square or a rectangle, whether provided with rounded corners, or not. In any case, it is advantageous for the shape of the standing wall 52, 62, 72 to be chosen such that a largest distance between the wall 52, 62, 72 and a geometric center axis of the basket 5, 6, 7 and a smallest distance between the wall 52, 62, 72 and the axis as mentioned do not deviate too much with respect to each other, i.e. are in a comparable order of magnitude, so that the basket 5, 6, 7 is free from projecting areas which are apt to remain at a lower temperature than more centrally positioned areas during a steaming process, or which would require the presence of heaters at various positions in the device steaming 1. For sake of completeness, it is noted that in a basket 5, 6, 7 having a flat bottom 51, 61, 71 and a standing wall 52, 62, 72 extending perpendicular with respect to the bottom 51, 61, 71 and having a symmetric shape, the geometric center axis is defined by the axis of symmetry of the standing wall 52, 62, 72 and extends as a straight line in an orientation which is parallel to the standing wall 52, 62, 72 and perpendicular to the bottom 51, 61, 71.

## Claims

1. Device (1) for steaming food, comprising a base part (2) and at least one basket (5, 6, 7) which is intended to be positioned above the base part (2) in a normal orientation of the device (1), wherein the at least one basket (5, 6, 7) has a bottom (51,61, 71) provided with holes (53) for letting through steam and a standing wall (52, 62, 72) projecting from the bottom (51, 61, 71) and delimiting a space above the bottom (51, 61, 71) for receiving and containing food to be steamed, wherein the base part (2) comprises a steam chamber (25) for containing water to be converted into steam and heating means (23) associated with the steam chamber (25) for heating water which is inside the steam chamber (25), a reservoir (22) for containing water to be supplied to the steam chamber (25), which is in fluid communication with the steam chamber (25), and also a drip tray (3) for receiving fluid from the at least one basket (5, 6, 7) during operation of the device (1) and for closing an open top side of the reservoir (22), wherein the device (1) further comprises a circuit for controlling a power supply to the heating means (23) **characterized in that** said circuit comprises a temperature sensor (35) which is arranged at a position in the drip tray (3), at a distance with respect to a first imaginary ring-shaped plane defined by an outer wall (26) of a steam outlet (33) of the steam chamber (25) and an extension thereof in a range of 0.5 to 0.9 of a total distance between the first imaginary ring-shaped plane and a second imaginary ring-shaped plane defined by the standing wall (52, 62, 72) of the at least one basket (5, 6, 7) and an extension thereof, measured along an imaginary line intersecting both a geometric center axis (27) of the steam outlet (33) and the position of the temperature sensor (35), in a plane perpendicular to the geometric center axis (27) of the steam outlet (33).

2. Device (1) for steaming food according to claim 1, wherein the temperature sensor (35) is arranged on the base part (2), at a side of the base part (2) which is a top side in the normal orientation of the device (1), and wherein the drip tray (3) is provided with a hole (36) for letting through the temperature sensor (35) when the drip tray (3) is put in place on the base part (2).

3. Device (1) for steaming food according to claim 1, wherein the controlling circuit is programmed to realize at least three temperature phases during operation of the device (1), wherein a temperature associated with an intermediate temperature phase is lower than temperatures associated with a start temperature phase and a final temperature phase.

4. Device (1) for steaming food according to claim 1, wherein the controlling unit is programmed to realize four temperature phases, wherein, in a first phase, a temperature is set in a range between 80°C and 100°C, during a time in a range between 2 and 10 minutes, wherein, in a second phase, a temperature is set in a range between 50°C and 90°C, during a time in a range between 0 and 120 minutes, wherein, in a third phase, a temperature is set in a range between 90°C and 100°C, during a time in a range between 0 and 120 minutes, and wherein, in a fourth phase, a temperature is set in a range between 60°C and 100°C, during a time in a range between 0 and 60 minutes.

5. Device (1) for steaming food according to claim 4, wherein a setpoint in the second phase is between 60°C and 80°C, and a duration of the third phase is 0 minutes.

6. Device (1) for steaming food according to claim 4, wherein a setpoint in the second phase is between 60°C and 80°C, and a duration of the second phase is 15-60 minutes.

7. Device (1) for steaming food according to claim 4, wherein a setpoint in the second phase is between 45°C and 60°C, and a duration of the second phase is 15-60 minutes.

## Patentansprüche

1. Gerät (1) zum Dampfgaren von Nahrungsmitteln, ein Unterteil (2) und zumindest einen Korb (5, 6, 7) umfassend, der dazu vorgesehen ist, in einer normalen Ausrichtung des Gerätes (1) oberhalb des Unterteils (2) positioniert zu werden, wobei der zumindest ein Korb (5, 6, 7) einen Boden (51, 61, 71) aufweist, der mit Löchern (53) zum Durchlassen von Dampf versehen ist, und eine aufrechte Wand (52, 62, 72), die sich aus dem Boden (51, 61, 71) heraus erstreckt und einen Raum über dem Boden (51, 61, 71) zum Aufnehmen und Beinhalten von Nahrungsmitteln eingrenzt, die mit Dampf zu garen sind, wobei das Unterteil (2) eine Dampfkammer (25) zum Beinhalten von Wasser umfasst, das in Dampf zu verwandeln ist, und Heizmittel (23), die der Dampfkammer (25) zugeordnet sind, um das Wasser zu erhitzen, das sich in der Dampfkammer (25) befindet, einen Tank (22) zum Beinhalten von Wasser umfasst, das in die Dampfkammer (25) einzubringen ist, der in einer Fluidverbindung zur Dampfkammer (25) steht, und auch eine Abtropfschale (3) zum Auffangen einer Flüssigkeit aus dem zumindest einen Korb (5, 6, 7) während des Betriebs des Gerätes (1) und zum Schließen einer offenen Oberseite des Tanks (22), wobei das Gerät (1) darüber hinaus einen Kreis zum Steuern einer Stromversorgung der Heizmittel (23) umfasst, **dadurch gekennzeichnet, dass** der besagte Kreis einen Temperatursensor (35) umfasst, der in einer Position in der Abtropfschale (3), in einem Abstand im Verhältnis zu einer ersten gedachten ringförmigen Ebene angeordnet ist, die durch eine Außenwand (26) eines Dampfauslasses (33) der Dampfkammer (25) und einer Erweiterung davon in einem Bereich von 0,5 bis 0,9 eines Gesamtabstandes zwischen der ersten gedachten ringförmigen Ebene und einer zweiten gedachten ringförmigen Ebene definiert wird, die durch die aufrechte Wand (52, 62, 72) von zumindest einem Korb (5, 6, 7) und einer Erweiterung davon definiert wird, gemessen entlang einer gedachten Linie, die sowohl eine geometrische Mittelachse (27) des Dampfauslasses (33), als auch die Position des Temperatursensors (35) in einer Ebene senkrecht zur geometrischen Mittelachse (27) des Dampfauslasses (33) schneidet.

2. Gerät (1) zum Dampfgaren von Nahrungsmitteln nach Anspruch 1, wobei der Temperatursensor (35) am Unterteil (2), an einer Seite des Unterteils (2) angeordnet ist, die in einer normalen Ausrichtung des Gerätes (1) eine Oberseite ist, und wobei die Abtropfschale (3) mit einem Loch (36) zum Durchlassen des Temperatursensors (35) versehen ist, wenn die Abtropfschale (3) am Unterteil (2) angebracht wird.

3. Gerät (1) zum Dampfgaren von Nahrungsmitteln nach Anspruch 1, wobei der Steuerkreis programmiert ist, um während des Betriebs des Gerätes zumindest drei Temperaturphasen (1) zu erzeugen, wobei eine Temperatur, die einer Zwischentemperaturphase zugeordnet ist, niedriger ist, als die Temperaturen, die einer Starttemperaturphase und einer Endtemperaturphase zugeordnet werden.

4. Gerät (1) zum Dampfgaren von Nahrungsmitteln nach Anspruch 1, wobei die Steuereinheit programmiert ist, um vier Temperaturphasen zu erzeugen, wobei in einer ersten Phase eine Temperatur in einem Bereich zwischen 80°C und 100°C während einer Zeitdauer zwischen 2 und 10 Minuten eingestellt wird, in einer zweiten Phase eine Temperatur in einem Bereich zwischen 50°C und 90°C während einer Zeitdauer zwischen 0 und 120 Minuten eingestellt wird, wobei in einer dritten Phase eine Temperatur in einem Bereich zwischen 90°C und 100°C während einer Zeitdauer zwischen 0 und 120 Minuten eingestellt wird, und wobei in einer vierten Phase eine Temperatur in einem Bereich zwischen 60°C und 100°C während einer Zeitdauer zwischen 0 und 60 Minuten eingestellt wird.

5. Gerät (1) zum Dampfgaren von Nahrungsmitteln nach Anspruch 4, wobei ein Sollwert in der zweiten Phase zwischen 60°C und 80°C liegt und eine Dauer der dritten Phase 0 Minuten beträgt.

6. Gerät (1) zum Dampfgaren von Nahrungsmitteln nach Anspruch 4, wobei ein Sollwert in der zweiten Phase zwischen 60°C und 80°C liegt und eine Dauer der zweiten Phase 15 bis 60 Minuten beträgt.

7. Gerät (1) zum Dampfgaren von Nahrungsmitteln nach Anspruch 4, wobei ein Sollwert in der zweiten Phase zwischen 45°C und 60°C liegt und eine Dauer der zweiten Phase 15 bis 60 Minuten beträgt.

## Revendications

1. Dispositif (1) pour cuire un aliment à la vapeur, comprenant une partie de base (2) et au moins un panier (5, 6, 7) qui est prévu pour être positionné au-dessus de la partie de base (2) dans une orientation normale du dispositif (1), dans lequel l'au moins un panier (5, 6, 7) comporte un fond (51, 61, 71) pourvu de trous (53) pour laisser passer de la vapeur à travers et une paroi verticale (52, 62, 72) faisant saillie à partir du fond (51, 61, 71) et délimitant un espace au-dessus du fond (51, 61, 71) pour recevoir et contenir un aliment destiné à être cuit à la vapeur, dans lequel la partie de base (2) comprend une chambre à vapeur (25) pour contenir de l'eau destinée à être convertie en vapeur et des moyens chauffants (23) associés à la chambre à vapeur (25) pour chauffer de l'eau qui est à l'intérieur de la chambre à vapeur (25), un réservoir (22) pour contenir de l'eau destinée à être fournie à la chambre à vapeur (25), qui est en communication fluidique avec la chambre à vapeur (25), et également un plateau d'égouttage (3) pour recevoir un fluide à partir de l'au moins un panier (5, 6, 7) durant le fonctionnement du dispositif (1) et pour fermer un côté supérieur ouvert du réservoir (22), dans lequel le dispositif (1) comprend en outre un circuit pour commander une alimentation en énergie électrique aux moyens chauffants (23), **caractérisé en ce que** ledit circuit comprend un capteur de température (35) qui est agencé à une position dans le plateau d'égouttage (3), à une distance par rapport à un premier plan imaginaire de forme annulaire défini par une paroi extérieure (26) d'une sortie de vapeur (33) de la chambre à vapeur (25) et une extension de celle-ci dans une plage de 0,5 à 0,9 d'une distance totale entre le premier plan imaginaire de forme annulaire et un second plan imaginaire de forme annulaire défini par la paroi verticale (52, 62, 72) de l'au moins un panier (5, 6, 7) et une extension de celle-ci, mesurée le long d'une ligne imaginaire intersectant à la fois un axe central géométrique (27) de la sortie de vapeur (33) et la position du capteur de température (35), dans un plane perpendiculaire à l'axe central géométrique (27) de la sortie de vapeur (33).

2. Dispositif (1) pour cuire un aliment à la vapeur selon la revendication 1, dans lequel le capteur de température (35) est agencé sur la partie de base (2), sur un côté de la partie de base (2) qui est un côté supérieur dans l'orientation normale du dispositif (1), et dans lequel le plateau d'égouttage (3) est pourvu d'un trou (36) pour laisser passer le capteur de température (35) à travers lorsque le plateau d'égouttage (3) est mis en place sur la partie de base (2).

3. Dispositif (1) pour cuire un aliment à la vapeur selon la revendication 1, dans lequel le circuit de commande est programmé pour réaliser au moins trois phases de température durant le fonctionnement du dispositif (1), dans lequel une température associée à une phase de température intermédiaire est inférieure à des températures associées à une phase de température de départ et une phase de température finale.

4. Dispositif (1) pour cuire un aliment à la vapeur selon la revendication 1, dans lequel l'unité de commande est programmée pour réaliser quatre phases de température, dans lequel, dans une première phase, une température est réglée dans une plage entre 80°C et 100°C, durant une période dans une plage entre 2 et 10 minutes, dans lequel, dans une deuxième phase, une température est réglée dans une plage entre 50°C et 90°C, durant une période dans une plage entre 0 et 120 minutes, dans lequel, dans une troisième phase, une température est réglée dans une plage entre 90°C et 100°C, durant une période dans une plage entre 0 et 120 minutes, et dans lequel, dans une quatrième phase, une température est réglée dans une plage entre 60°C et 100°C, durant une période dans une plage entre 0 et 60 minutes.

5. Dispositif (1) pour cuire un aliment à la vapeur selon la revendication 4, dans lequel une valeur de consigne dans la deuxième phase est entre 60°C et 80°C, et une durée de la troisième phase est 0 minute.

6. Dispositif (1) pour cuire un aliment à la vapeur selon la revendication 4, dans lequel une valeur de consigne dans la deuxième phase est entre 60°C et 80°C, et une durée de la deuxième phase est 15 à 60 minutes.

7. Dispositif (1) pour cuire un aliment à la vapeur selon la revendication 4, dans lequel une valeur de consigne dans la deuxième phase est entre 45°C et 60°C, et une durée de la deuxième phase est 15 à 60 minutes.
